# EUROPEAN PATENT SPECIFICATION

(11) **EP 0 978 650 B1**
(45) Date of publication and mention of the grant of the patent: **31.03.2004**
(21) Application number: 99305801.5
(22) Date of filing: 22.07.1999
(51) Int. Cl.: F02M 59/44, F02M 51/06, F02M 61/08, F02M 61/16, F16J 9/16, F16J 15/08, F16J 9/20

(54) **Seal**
Dichtung
Joint d'étanchéité

(30) Priority: 07.08.1998 GB 9817128
(43) Date of publication of application: 09.02.2000
(73) Proprietor: Delphi Technologies, Inc., Troy, MI 48098 (US)
(72) Inventor: Cooke, Michael Peter, Gillingham, Kent ME7 1DR (GB)
(74) Representative: Keltie, David Arthur

(56) References cited:
- WO-A-97/00394
- US-A- 4 389 018
- US-A- 5 567 134
- US-A- 5 630 550

## Description

This invention relates to a seal, and in particular to a seal capable of withstanding high pressures and suitable for use in the fuel supply system for a compression ignition internal combustion engine.

In the fuel system for a compression ignition internal combustion engine, very high fuel pressures are commonly encountered. For example, in a fuel system of the common rail type, the fuel pressure within the common rail may be around 2000 bar. Clearly, in order to achieve such a pressure, and in order to optimise efficiency, it is important to restrict leakage from the various parts of the fuel system, for example the fuel pump and the fuel injectors, to a very low level. In particular, at such high pressures, the fuel pressure within bores formed in the components used in the fuel system may dilate and as a result, the clearance between the walls of the bores and any members slidable within the bores may increase giving rise to increased leakage.

Seals in fuel systems are known from US 4389018 A and WO 97/00394 A.

It is an object of the invention to provide a seal suitable for use in a variety of fuel system applications whereby leakage of fuel can be restricted to an acceptable level even when the fuel system is to be operated at high fuel pressures.

According to the present invention there is provided a seal comprising a support member having an outer periphery of substantially circular form, and a resilient seal member mounted upon the support member, the seal member, when occupying a relaxed condition, having an outer periphery of generally circular form and a diameter greater than that of the support member, the seal member and support member being eccentric to one another when the seal member occupies the relaxed condition, the seal member being compressible towards a compressed condition in which the seal member and the support member are of substantially equal diameter and are substantially coaxial.

The seal member may include a region of split ring like form.

The seal may further include a cover member, the seal member being located between the support member and the cover member.

According to another aspect of the invention there is provided a high pressure fuel pump comprising a pumping plunger reciprocable within a bore under the influence of a cam arrangement, and a seal of the type defined hereinbefore carried by the pumping plunger, the seal member of the seal engaging the wall of the bore, the seal being arranged to substantially prevent fuel from flowing between the pumping plunger and the wall of the bore when the pumping plunger moves in a first direction.

According to a further aspect of the invention there is provided a fuel injector comprising a valve needle slidable within a bore, a surface associated with the needle being subject to the fluid pressure within a control chamber defined, in part, by a piston slidable within a bore, and a seal of the type defined hereinbefore associated with the piston to restrict the escape of fluid from the control chamber between the piston and the bore within which the piston is slidable.

According to another aspect of the invention there is provided a fuel injector comprising a valve needle slidable within a bore, the needle carrying a seal of the type defined hereinbefore located so as to restrict leakage between the needle and the wall of the bore.

Where the injector is of the outwardly opening type, an additional seal of the type defined hereinbefore may be provided.

In each of the applications described hereinbefore, the use of the seal is advantageous in that leakage of fuel or another fluid at high pressure can be restricted to an acceptable level. The resilience of the seal member is sufficient to ensure that leakage is restricted to an acceptable level even if dilation of the bore within which the seal is located occurs, in use. It will further be appreciated that by using such a separate seal, components slidable within bores, in use, do not need to be machined to the same level of accuracy as in prior arrangements in which the fit of the components within the bores governs the level of leakage.

According to another aspect of the invention there is provided a method of manufacturing a seal comprising the steps of securing a seal member having a substantially circular periphery to a support member having a substantially circular periphery such that the seal and support members are substantially coaxial, and deforming the seal member to increase its diameter such that the seal member is eccentric to the support member after deformation.

A step of grinding the seal may be performed prior to the step of deforming the seal member.

The seal member may be provided with an arcuate slot, the step of deforming the seal member including the step of fracturing the seal member radially outwardly of the slot. This may be achieved by applying fluid under pressure to the slot.

The invention will further be described, by way of example, with reference to the accompanying drawings, in which:-
Figures 1a and 1b are plan and sectional views of a seal in accordance with an embodiment of the invention, in it relaxed condition;
Figures 2a and 2b are views similar to Figures 1a and 1b showing the seal in its compressed condition;
Figures 3a, 3b, 4a, 4b, 5a and 5b are views similar to Figures 1a and 1b illustrating three alternative embodiments;
Figure 6 is a view illustrating part of a fuel pump which incorporates the seal of Figures 3a and 3b;
Figure 7 is a view illustrating part of a fuel injector which incorporates the seal of Figures 1a and 1b;
Figure 8 is a view illustrating part of another fuel injector which incorporates the seal of Figures 5a and 5b;
Figure 9 is a perspective view illustrating an alternative seal;
Figure 10 is a side view of the seal of Figure 9;
Figure 11 is a view similar to Figure 10 illustrating a modification; and
Figures 12 and 13 illustrate an apparatus for use in manufacture of the seals of Figures 9 to 11.

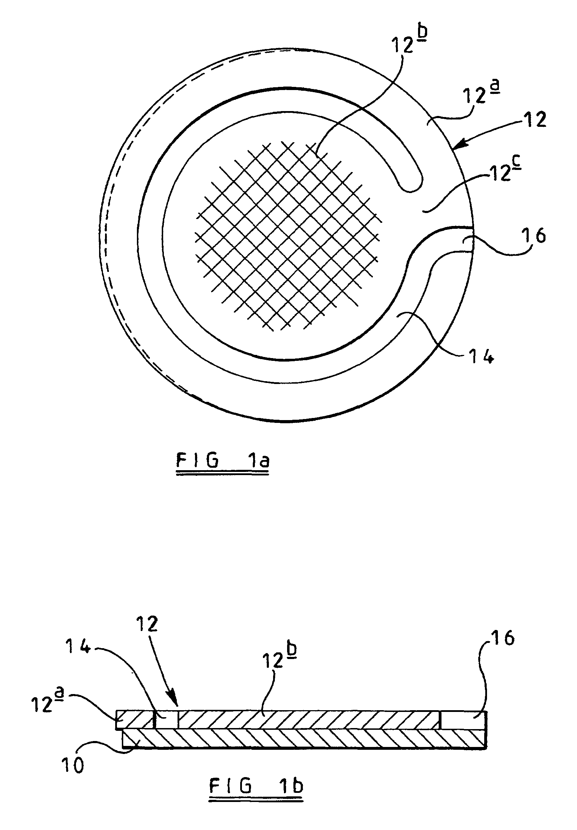

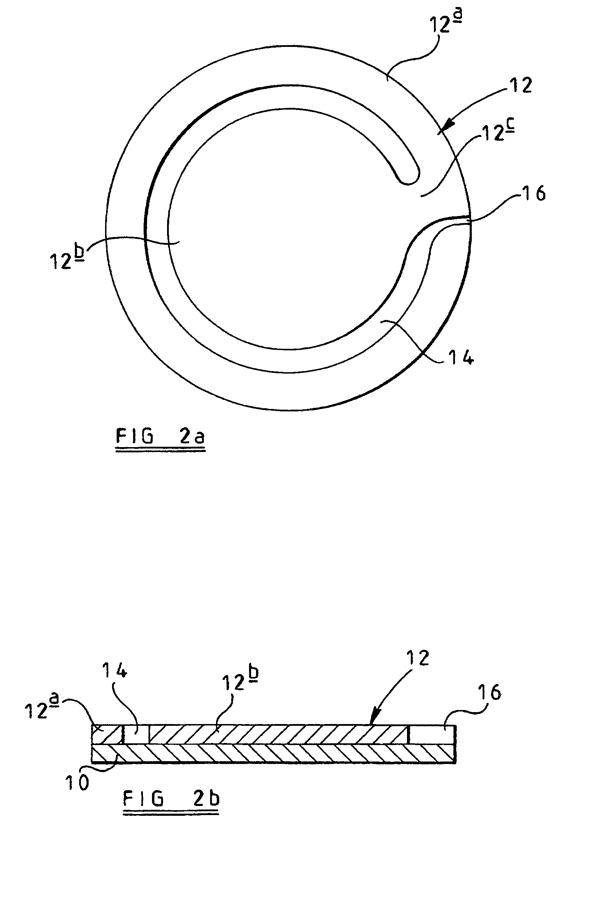

The seal illustrated in Figures 1a, 1b, 2a and 2b comprises a support member 10 of substantially circular form, the diameter of which is slightly smaller than the diameter of the bore or drilling within which a substantially fluid tight seal is to be formed, in use. A seal member 12 is secured to the upper surface of the support member 10, the seal member 12 comprising a member of circular form, the diameter of which is slightly greater than the diameter of the bore within which a substantially fluid tight seal is to be formed. The seal member 12 is provided with a part-circular slot 14 opening into a slot 16 which extends across an outer part of the diameter of the seal member 12. The provision of the slots 14, 16 in the seal member 12 result in the seal member 12 having an outer region 12a which is effectively of split ring like form, the outer region 12a being integrally formed with an inner region 12b of substantially circular form through a connecting region 12c located between the ends of the slot 14.

As illustrated in Figures 1a and 1b, when the seal member 12 is in its relaxed condition, the diameter thereof is greater than that of the support member 10, and the axis of the seal member is offset from the axis of the support member 10 with the result that the edge of the seal member 12 at the point at which the slot 16 opens into the exterior periphery of the seal member 12 is aligned with the edge of the support member 10.

As denoted by the hatched region in Figure 1a, the region 12b of the seal member 12 is secured to the support member 10. The support member 10 and seal member 12 are conveniently constructed from a resilient material, for example spring steel or phosphor bronze, and are conveniently secured to one another using a resistance welding technique, but it will be appreciated that alternative materials can be used, and that the support member and seal member may be secured to one another using an alternative technique.

As illustrated in Figures 2a and 2b, when a compressive force is applied to the seal member 12 as occurs in use, the outer region 12a thereof is compressed, reducing the outer diameter of the seal member 12 to substantially than that of the support member 10, the outer region 12a of the seal member 12 flexing to reduce the widths of the slots 14, 16. It will be appreciated that as the region of the seal member 12 at the point at which the slot 16 opens to the periphery of the seal member 12 is aligned with the edge of the support member 10, and as in this condition, the seal member 12 is of substantially equal diameter to the support member 10, then in this condition, the support member 10 and seal member 12 are substantially coaxial.

In use, the seal is located within a bore within which a substantially fluid tight seal is to be formed, the introduction of the seal requiring compression of the seal member 12. Once in position within the bore, the resilience of the seal member causes the outer surface thereof to engage the wall of the bore in a substantially fluid tight manner. As the part of the seal member 12 within which the slot 16 is formed is aligned with the support member 10, the support member 10 closes the slot 16, thus avoiding leakage of fluid past the seal through the slot 16.

The seal is free to move within the bore, in use, thus the seal can be mounted upon or carried by a component slidable within the bore. The resilience of the seal can compensate for slight manufacturing inaccuracies and for dilation of the bore, in use. The resilience of the seal can further compensate for slight inaccuracies in the positioning of the seal thus, if the component carrying the seal is machined in such a manner that, in use, the seal is tilted slightly relative to the axis of the bore, a substantially fluid tight seal can still be achieved.

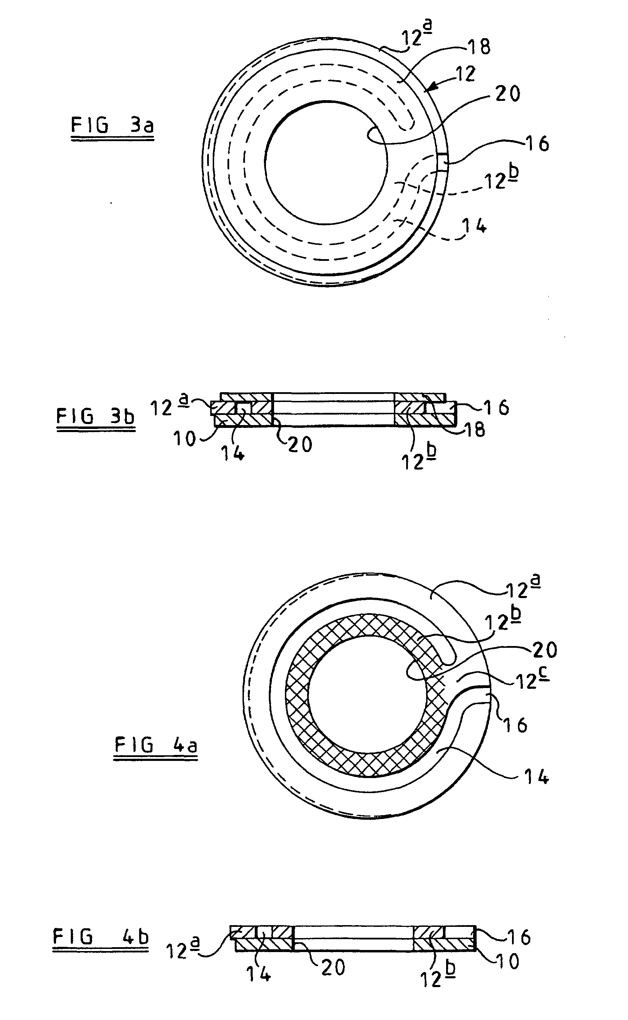

Figures 3a and 3b illustrate a modification to the arrangement described hereinbefore in which a cover member 18 is secured to the surface of the seal member 12 remote from the support member 10. The cover member 18 is of diameter smaller than that of the support member 10, the support member 10 and cover member 18 being substantially coaxial with one another. The cover member 18 is secured to the central part 12b of the seal member 12, for example using a resistance welding technique. The support member 10, central part 12b of the seal member 12 and cover member 18 are each shaped to define an opening 20 extending through the seal, through which a component carrying the seal extends, in use.

The provision of a cover member is advantageous in that the seal member is supported for movement in either direction within the bore, in use.

The arrangement illustrated in Figures 4a and 4b is similar to that of Figures 3a and 3b but in which the cover member 18 is omitted. As described with reference to Figures 3a and 3b, the central part 12b of the seal member 12 and the support member 10 are shaped to define an opening 20 extending through the seal.

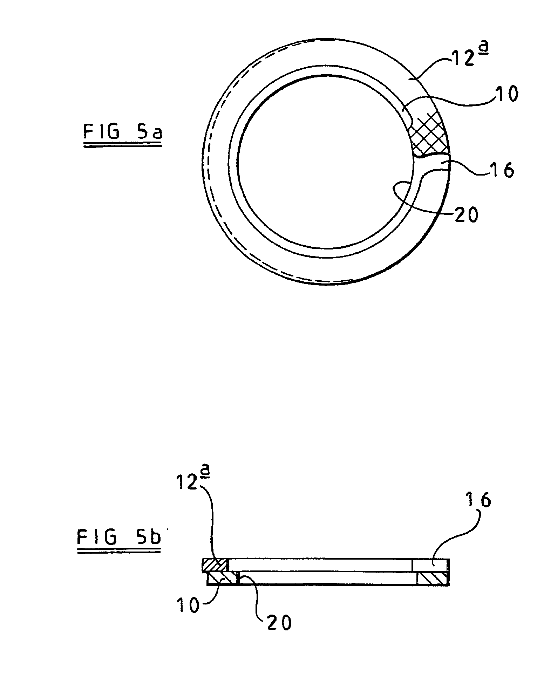

Figures 5a and 5b illustrate a further modification in which the seal member 12 is of split annular form, in effect the seal member 12 being shaped to omit the provision of the inner region 12b. In the embodiments described hereinbefore, the seal member 12 and support member 10 have been secured to one another by securing the inner region 12b to the support member 10. As the arrangement of Figures 5a and 5b does not include such an inner region 12b, clearly this approach cannot be taken and instead a part of the outer region 12b of the support member 12 adjacent the slot 16 thereof is secured to the support member 10. As in the arrangements described hereinbefore, the positioning of the seal member 12 relative to the support member 10 is such that the slot 16 opens into the periphery of the seal member 12 at a position aligned with the edge of the support member 10.

The arrangement of Figures 5a and 5b is particularly suitable where a relatively large diameter member or component is to be received within the opening 20 extending through the seal as the diameter of the opening 20 can be increased without increasing the outer diameter of the seal.

In each of the seals described hereinbefore, the slot 16 which extends to the periphery of the seal member 12 is located so as to be aligned with the edge of the support member 10. As a result, the support member 10 acts to mask the slot 16 which forms the split of the split ring defined by the outer region 12a of the seal member 12. As a result, even if the width of the slot 16 varies, in use, the leakage remains at a small level. Manufacturing inaccuracies in producing the bores within which the seals are slidable, in use, can be compensated for by expansion or compression of the seal member 12, in use, thus the use of the invention is advantageous in that manufacturing tolerances can be compensated for, and variations in the dimensions of bores, for example resulting from thermal expansion or contraction or due to dilation of bores due to the fuel pressures therein can be compensated for.

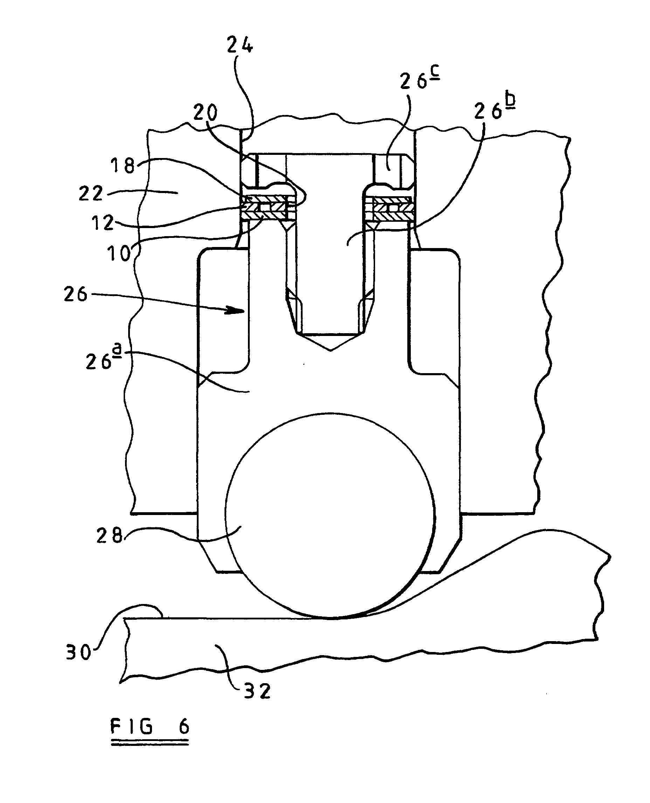

Figure 6 illustrates a pump arrangement incorporating a seal of the type described hereinbefore with reference to Figures 3a and 3b. The pump arrangement illustrated in Figure 6 comprises a housing 22 defining a plunger bore 24 within which a pumping plunger arrangement 26 is reciprocable. The pumping plunger arrangement 26 includes a cam follower member in the form of a roller 28 which is engageable with a cam surface 30 formed on a cam ring 32 such that as the housing 22 moves relative to the cam ring 32, the roller 28 rides over cam lobes forming part of the cam surface 30 causing the plunger arrangement 26 to reciprocate within the bore 24.

As illustrated in Figure 6, the plunger arrangement 26 includes a shoe member 26a which includes a screw-threaded drilling within which a member 26b is located, the shoe member 26a and member 26b together holding captive a seal of the type described hereinbefore with reference to Figures 3a and 3b. The opening 20 of the seal is of diameter greater than the diameter of the adjacent part of the member 26b thus fuel is able to flow through the opening 20, in use, and the member 26b is provided with drillings 26c to permit fuel to flow past the member 26b.

In the position illustrated, the plunger arrangement 26 occupies its outermost position, the bore 24 being charged with fuel at relatively low pressure. As illustrated, the support member 10 of the seal seats against the inner end of the shoe member 26a, and the seal member 12 engages the surface of the bore 24. As a result, a substantially fluid tight seal is formed between the bore 24 and the shoe member 26a.

Movement of the housing 22 relative to the cam ring 32 causes the roller 28 to ride over the cam surface 30 with the result that the plunger arrangement 26 is pushed inwardly, compressing the fuel within the bore 24 to a high pressure.

After the plunger arrangement 26 has completed inward movement, outward movement of the plunger arrangement 26 takes place, for example under the influence of a return spring (not shown). During such outward movement, the seal is permitted to lift from the inner end of the shoe member 26a, thus breaking the fluid tight seal between the wall of the bore 24 and the shoe member 26a, and fuel is permitted to flow through the drillings 26c, and through the opening 20 of the seal, the fuel subsequently flowing between the seal and the shoe member 26a.

Although the description hereinbefore is of the use of the seal in an arrangement in which fuel is not permitted to flow past the seal during inward movement of the plunger arrangement 26, but is permitted to flow past the seal during outward movement of the plunger arrangement 26, it will be appreciated that the seal could be used in an arrangement in which fuel is not permitted to flow past the seal during movement of the plunger arrangement 26 in either direction.

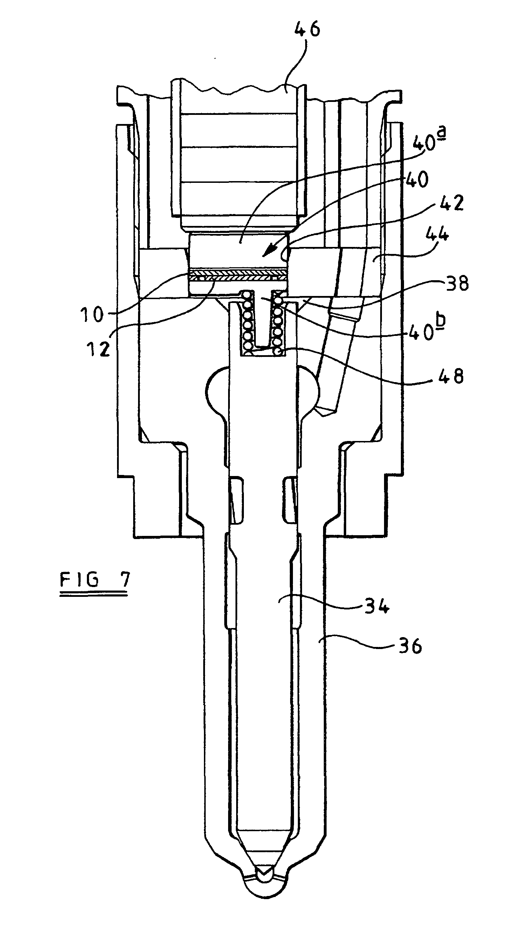

Figure 7 illustrates an alternative application of a seal in accordance with the invention. Figure 7 illustrates a fuel injector which comprises a needle 34 slidable within a bore formed in a nozzle body 36. The needle 34 is biased into engagement with a seating by means of a spring 48 and by the force applied to an upper end surface of the needle 34, in the orientation illustrated, by the pressure of fluid within a control chamber 38. The needle 34 is shaped to include thrust surfaces angled such that the application of fuel under pressure thereto, in use, applies a force to the needle 34 urging the needle 34 away from its seating against the action of the spring 48 and the fluid pressure within the control chamber 38.

The fluid pressure within the control chamber 38 is controlled by means of a piston 40 which is slidable within a bore 42 formed in a distance piece 44. The piston 40 is moveable under the influence of a piezoelectric actuator arrangement 46, and against the action of the spring 48 to control the fluid pressure within the control chamber 38, the spring 48 being engaged between the piston 40 and the needle 34.

The piston 40 is of two-part construction, a first part 40a thereof engaging the piezoelectric actuator 46, a second part 40b of the piston 40 acting to guide the spring 48. A seal of the type described hereinbefore with reference to Figures 1a, 1b, 2a and 2b is sandwiched between the first and second parts 40a, 40b of the piston 40, the seal member 12 of the seal engaging the wall of the bore 42 to substantially prevent fluid from escaping from the control chamber 38, in use.

In use, with fuel under high pressure applied to the bore of the nozzle body 36, and with the actuator 46 occupying a position in which the axial length thereof is relatively great, the fluid pressure within the control chamber 38 in conjunction with the action of the spring 48 is sufficient to ensure that the needle 34 is unable to lift from its seating under the action of the fuel pressure applied to the thrust surfaces thereof. In order to commence injection, the actuator 46 is de-energized to reduce its length, thus permitting the piston 40 and the seal to move in an upward direction in the orientation illustrated, thus reducing the fluid pressure within the control chamber 38, and hence reducing the magnitude of the downward force applied to the needle 34. The reduction in the magnitude of the downward force applied to the needle 34 will subsequently reach a point beyond which the fuel pressure acting upon the thrust surfaces of the needle 34 is sufficient to lift the needle 34 from its seating. In order to terminate injection, the actuator 46 is energized and returned to substantially its original length. As a result, the piston 40 and seal return to substantially their original positions, repressurizing the fluid within the control chamber and increasing the magnitude of the downward forces applied to the needle 34 to an extent sufficient to cause the needle 34 to move into engagement with its seating.

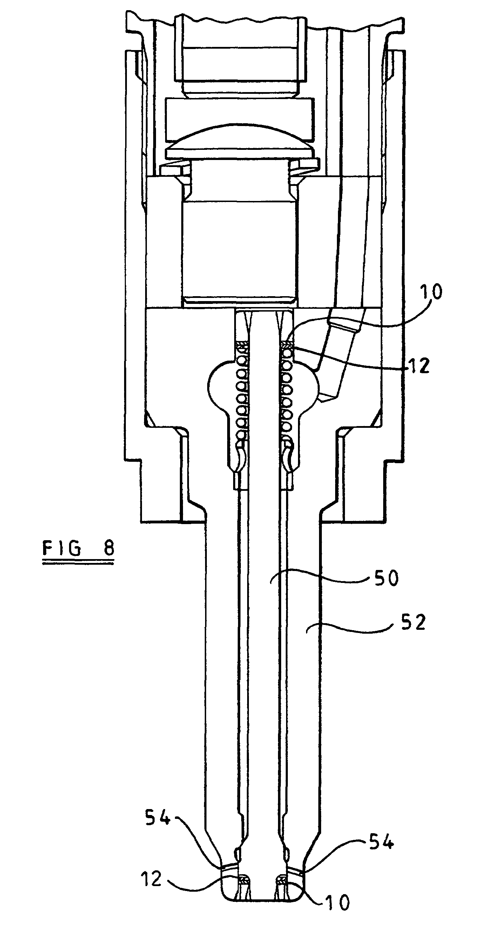

Figure 8 illustrates an alternative type of injector, the injector comprising a needle 50 slidable within a bore formed in a nozzle body 52. The injector is of the outwardly opening type, downward movement of the needle 50, in the orientation illustrated, causing the needle 50 to lift from a seating, and permitting fuel to flow to one or more outlet openings 54 provided adjacent the lower end of the nozzle body 52. The upper and lower ends of the needle 50 are of diameter substantially equal to the diameter of the adjacent parts of the bore of the nozzle body 52 and serve to guide the needle 50 for sliding movement, and in order to provide a substantially fluid tight seal between the needle 50 and these parts of the bore, seals of the type described hereinbefore with reference to Figures 5a and 5b are carried by the needle 50.

It will be appreciated that in any of the applications described hereinbefore, if a single one of the seals is insufficient to produce the desired level of sealing, several of the seals may be stacked, one upon another, to improve the level of sealing achieved, and to increase the fuel pressure which can be withstood by the seal.

If, in use, high sliding velocities are likely to be encountered and/or extremely high pressures have to be withstood, then the seal member and/or the wall of the bore may be coated with a hard coating such as titanium nitride, carbon-tungsten carbide or diamond-like carbon to reduce wear and reduce the risk of the seal member becoming welded to the wall of the bore.

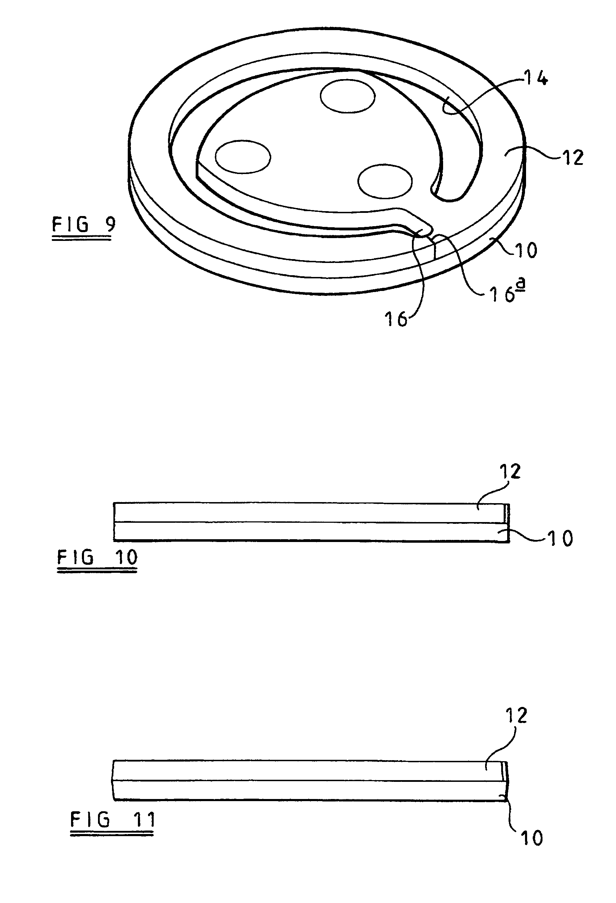

Figures 9 and 10 illustrate a seal which, in many respects, is identical to that of Figure 1. The main difference between the arrangement of Figures 9 and 10 and that of Figure 1 result from the manner in which the seal is constructed. In the arrangement of Figures 9 and 10, a resilient seal member 12 is secured to a support member 10. The seal and support members 10, 12 are, initially, of substantially equal diameter and extend substantially coaxially. The seal and support members 10, 12 are conveniently secured to one another using a welding technique.

As with the arrangement of Figure 1, the seal member is provided with a part circular slot 14 which opens into a generally radially extending slot 16. The slot 16 does not, however, extend to the periphery of the seal member 12. As a result, the seal and support members 10, 12 have continuous peripheral surfaces which can be ground, if necessary, to the correct diameter for the application in which the seal is to be used. The alignment, diameter tolerance, roundness and surface finish can therefore be improved compared to the arrangement of Figure 1.

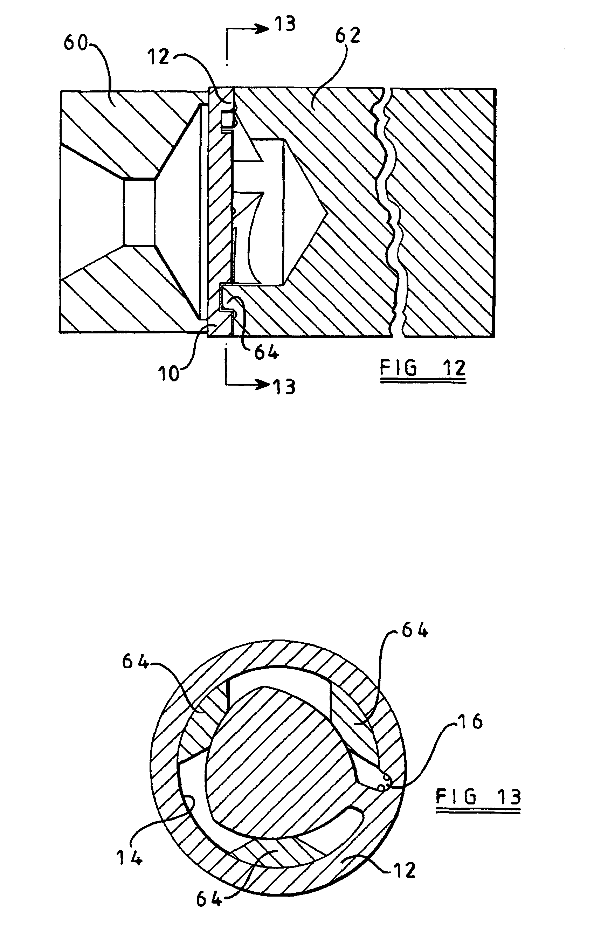

As illustrated in Figure 10, the seal and support members 10, 12 are machined such that they are of cylindrical form. Alternatively, as shown in Figure 11, these components may be ground to be of barrelled or part-spherical form thereby reducing friction between the seal and the wall of the bore in which the seal is located, in use, and providing improved tolerance to misalignment.

The grinding step is conveniently achieved by supporting the seal between first and second tools 60, 62 (see Figures 12 and 13) the second tool 62 including protruding legs 64 which are received within the slot 14. The cooperation between the legs 64 and the seal member 12 holds the seal securely and coaxially relative to the tools 60, 62 and permits the seal to be rotated during the grinding operation.

After the grinding operation has been completed, the seal member 12 is deformed to increase its outer diameter, the deformation resulting in the seal member 12 fracturing as denoted at 16a such that the slot 16 opens, through the fracture, to the periphery of the seal member 12. The tensile stresses introduced into the seal member 12 by the grinding operation will tend to cause the seal member 12 to spring outwardly such that, in a relaxed condition, it is of diameter slightly greater than the support member 10 and such that the seal and support members 10, 12 are eccentric to one another.

The deformation step may be achieved by locating the seal within a bore provided in a housing and applying fluid under pressure to the slot 14. As a result, an outwardly directed force is applied to the outer part of the seal member 12. The fluid pressure is chosen to be sufficiently high to cause the seal member 12 to fracture whereon the seal member 12 will spring outwardly as described hereinbefore.

If the bore is of sufficient diameter, then the fluid under pressure will cause the seal member 12 to move beyond a position in which the yield stress of the part of the seal member 12 adjacent the slot 14 is exceeded assisting the tensile surface stresses induced during grinding in ensuring that, when relaxed, the seal member 12 is of increased diameter.

The method described hereinbefore is advantageous in that, in use, the slot 16 is almost closed thus the risk of leakage past the seal is reduced.

The manufacturing technique described hereinbefore may be used with others of the seal embodiments described hereinbefore.

## Claims

1. A seal comprising a support member (10) having an outer periphery of substantially circular form, and a resilient seal member (12) mounted upon the support member (10), the seal member (12), when occupying a relaxed condition, having an outer periphery of generally circular form and a diameter greater than that of the support member (10), the seal member (12) and support member (10) being eccentric to one another when the seal member (12) occupies the relaxed condition, the seal member (12) being compressible towards a compressed condition in which the seal member (12) and the support member (10) are of substantially equal diameter and are substantially coaxial.

2. A seal as claimed in Claim 1, wherein the seal member (12) includes a region of split ring like form.

3. A seal as claimed in Claim 2, wherein the region of split ring form comprises an annular part of the seal member (12) which is broken, as least in part, by a slot (16).

4. A seal as claimed in Claim 2 or Claim 3, wherein the region of split ring form comprises an annular part of the seal member (12) which is broken, at least in part, by a fracture (16a).

5. A seal as claimed in any one of the preceding claims, further comprising a cover member (18), the seal member (12) being located between the support member (10) and the cover member (18).

6. A high pressure fuel pump comprising a pumping plunger (26) reciprocable within a bore (24) under the influence of a cam arrangement (28, 30, 32), and a seal as claimed in any one of the preceding claims carried by the pumping plunger (26), the seal member (12) of the seal engaging the wall of the bore (24), the seal being arranged to substantially prevent fuel from flowing between the pumping plunger (26) and the wall of the bore (24) when the pumping plunger (26) moves in a first direction.

7. A fuel injector comprising a valve needle (34) slidable within a bore, a surface associated with the needle (34) being subject to the fluid pressure within a control chamber (38) defined, in part, by a piston (40) slidable within a bore (42), and a seal as claimed in any one of Claims 1 to 5 associated with the piston (40) to restrict the escape of fluid from the control chamber (38) between the piston (40) and the bore (42) within which the piston (40) is slidable.

8. A fuel injector comprising a valve needle (50) slidable within a bore, the needle (50) carrying a seal as claimed in any one of Claims 1 to 5 located so as to restrict leakage between the needle (50) and the wall of the bore.

9. A method of manufacturing a seal comprising the steps of securing a seal member (12) having a substantially circular periphery to a support member (10) having a substantially circular periphery such that the seal and support members (10, 12) are substantially coaxial, and deforming the seal member (12) to increase its diameter such that the seal member (12) is eccentric to the support member (10) after deformation.

10. A method as claimed in Claim 9, further comprising a step of grinding the seal prior to the step of deforming the seal member (12).

11. A method as claimed in Claim 9 or Claim 10, wherein the seal member (12) is provided with an arcuate slot (14), the step of deforming the seal member (12) including the step of fracturing the seal member (12) radially outwardly of the slot (14).

12. A method as claimed in Claim 11, wherein the step of deforming the seal member (12) comprises applying fluid under pressure to the slot (14).

## Patentansprüche

1. Dichtung, umfassend ein Trägerelement (10) mit einem im wesentlichen kreisförmigen Außenrand und ein auf dem Trägerelement (10) befestigtes, elastisches Dichtungselement (12), wobei das Dichtungselement (12) dann, wenn es sich in einem spannungsfreien Zustand befindet, einen allgemein kreisförmigen Außenrand und einen Durchmesser besitzt, der größer ist als derjenige des Trägerelements (10), wobei das Dichtungselement (12) und das Trägerelement (10) exzentrisch zueinander angeordnet sind, wenn sich das Dichtungselement (12) im entspannten Zustand befindet, wobei das Dichtungselement (12) zu einem zusammengedrückten Zustand komprimiert werden kann, in welchem das Dichtungselement (12) und das Trägerelement (10) einen im wesentlichen identischen Durchmesser besitzen und im wesentlichen koaxial sind.

2. Dichtung nach Anspruch 1, worin das Dichtungselement (12) einen Bereich mit spaltringartiger Form besitzt.

3. Dichtung nach Anspruch 2, worin der spaltringförmige Bereich einen ringförmigen Teil des Dichtungselements (12) umfasst, der mindestens teilweise durch einen Schlitz (16) unterbrochen ist.

4. Dichtung nach Anspruch 2 oder Anspruch 3, worin der spaltringförmige Bereich einen ringförmigen Teil des Dichtungselements (12) umfasst, der zumindestens teilweise durch einen Riss oder Bruch (16a) unterbrochen ist.

5. Dichtung nach einem der voranstehenden Ansprüche, weiterhin umfassend ein Abdeckelement (18), wobei sich das Dichtungselement (12) zwischen dem Trägerelement (10) und dem Abdeckelement (18) befindet.

6. Hochdruck-Kraftstoffpumpe, umfassend einen Pumpenkolben (26), der unter dem Einfluss einer Nockenanordnung (28,30,32) innerhalb einer Bohrung (24) hin und her bewegt werden kann, und eine vom Pumpenkolben (26) getragene Dichtung nach einem der voranstehenden Ansprüche, wobei das Dichtungselement (12) der Dichtung am Rand der Bohrung (24) angreift und die Dichtung so angeordnet ist, dass sie Kraftstoff ganz wesentlich daran hindert, zwischen dem Pumpenkolben (26) und der Wand der Bohrung (24) zu fließen, wenn sich der Pumpenkolben (26) in eine erste Richtung bewegt.

7. Kraftstoffeinspritzventil, umfassend eine Ventilnadel (34), die innerhalb einer Bohrung verschieblich angeordnet ist, wobei eine mit der Nadel (34) verbundene Oberfläche dem Kraftstoffdruck innerhalb einer Steuerungskammer (38) ausgesetzt ist, die teilweise von einem innerhalb einer Bohrung (42) verschieblich angeordneten Kolben (40) begrenzt wird, und eine Dichtung nach einem der Ansprüche 1 bis 5, die mit dem Kolben (40) verbunden ist, um das Entweichen von Fluid aus der Steuerungskammer (38) zwischen dem Kolben (40) und der Bohrung (42) hindurch, innerhalb derer der Kolben (40) verschieblich ist, zu beschränken.

8. Kraftstoffeinspritzventil, umfassend eine innerhalb einer Bohrung verschieblich angeordnete Ventilnadel (50), wobei die Ventilnadel (50) eine Dichtung nach einem der Ansprüche 1 bis 5 trägt, die derart angeordnet ist, dass sie die Leckage zwischen der Nadel (50) und der Wand der Bohrung beschränkt.

9. Verfahren zum Herstellen einer Dichtung, umfassend die Schritte des Befestigens eines Dichtungselements (12) mit einem im wesentlichen kreisförmigen Außenrand auf einem Trägerelement (10) mit einem im wesentlichen kreisförmigen Außenrand derart, dass das Dichtungs- und das Trägerelement (10,12) im wesentlichen koaxial sind, und Verformen des Dichtungselements (12) unter Vergrößerung seines Durchmessers derart, dass das Dichtungselement (12) nach der Deformation im Verhältnis zum Trägerelement (10) exzentrisch angeordnet ist.

10. Verfahren nach Anspruch 9, weiterhin umfassend einen Schritt des (An)schleifens der Dichtung vor dem Schritt des Verformens des Dichtungselements (12).

11. Verfahren nach Anspruch 9 oder Anspruch 10, worin das Dichtungselement (12) mit einem bogenförmigen Schlitz (14) ausgestattet ist, wobei der Schritt des Verformens des Dichtungselements (12) den Schritt umfasst, das Dichtungselement (12) radial auswärts des Schlitzes (14) aufzubrechen oder aufzureißen.

12. Verfahren nach Anspruch 11, worin der Schritt des Verformens des Dichtungselements (12) das Aufbringen von unter Druck stehendem Fluid auf den Schlitz (14) umfasst.

## Revendications

1. Joint d'étanchéité comprenant un élément porteur (10) présentant une périphérie extérieure de forme sensiblement circulaire et un élément de joint d'étanchéité élastique (12) monté sur l'élément porteur (10), l'élément de joint d'étanchéité (12) ayant une périphérie extérieure de forme généralement circulaire et un diamètre supérieur à celui de l'élément porteur (10) lorsqu'il est dans un état détendu, l'élément de joint d'étanchéité (12) et l'élément porteur (10) étant excentriques l'un par rapport à l'autre lorsque l'élément de joint d'étanchéité (12) se trouve dans l'état détendu, l'élément de joint d'étanchéité (12) étant compressible dans un état compressé dans lequel l'élément de joint d'étanchéité (12) et l'élément porteur (10) ont un diamètre sensiblement égal et sont sensiblement coaxiaux.

2. Joint d'étanchéité selon la revendication 1, dans lequel l'élément de joint d'étanchéité (12) comprend une région ayant une forme semblable à une bague fendue.

3. Joint d'étanchéité selon la revendication 2, dans lequel la région ayant la forme d'une bague fendue comprend une partie annulaire de l'élément de joint d'étanchéité (12) qui est rompue, au moins partiellement, par une fente (16).

4. Joint d'étanchéité selon la revendication 2 ou la revendication 3, dans lequel la région ayant la forme d'une bague fendue comprend une partie annulaire de l'élément de joint d'étanchéité (12) qui est rompue, au moins partiellement, par une fracture (16a).

5. Joint d'étanchéité selon l'une quelconque des revendications précédentes, comprenant, en outre, un élément de recouvrement (18), l'élément de joint d'étanchéité (12) étant placé entre l'élément porteur (10) et l'élément de recouvrement (18).

6. Pompe à carburant à haute pression comprenant un piston plongeur (26) à mouvement alternatif à l'intérieur d'un alésage (24) sous l'influence d'un dispositif à came (28, 30, 32) et un joint d'étanchéité selon l'une quelconque des revendications précédentes porté par le piston plongeur (26), l'élément de joint d'étanchéité (12) du joint d'étanchéité s'engageant dans la paroi de l'alésage (24), le joint d'étanchéité étant disposé pour empêcher sensiblement le carburant de s'écouler entre le piston plongeur (26) et la paroi de l'alésage (24) lorsque le piston plongeur (26) se déplace dans une première direction.

7. Injecteur de carburant comprenant un pointeau de soupape (34) qui peut coulisser à l'intérieur d'un alésage, une surface associée au pointeau de soupape (34) étant soumise à la pression du fluide à l'intérieur d'une chambre de réglage (38) délimitée, en partie, par un piston (40) qui peut coulisser à l'intérieur d'un alésage (42) et un joint d'étanchéité selon l'une quelconque des revendications 1 à 5 associé avec le piston (40) pour limiter l'échappement du fluide hors de la chambre de réglage (38) entre le piston (40) et l'alésage (42) à l'intérieur duquel le piston (40) peut coulisser.

8. Injecteur de carburant comprenant un pointeau de soupape (50) qui peut coulisser à l'intérieur d'un alésage, le pointeau (50) portant un joint d'étanchéité selon l'une quelconque des revendications 1 à 5 monté de manière à limiter les fuites entre le pointeau (50) et la paroi de l'alésage.

9. Procédé pour fabriquer un joint d'étanchéité comprenant les étapes de fixation d'un élément de joint d'étanchéité (12) ayant une périphérie sensiblement circulaire sur un élément porteur (10) ayant une périphérie sensiblement circulaire de manière à ce que le joint d'étanchéité et les éléments porteurs (10, 12) soient sensiblement coaxiaux, et de déformation de l'élément de joint d'étanchéité (12) pour augmenter son diamètre afin que l'élément de joint d'étanchéité (12) soit excentrique par rapport à l'élément porteur (10) après la déformation.

10. Procédé selon la revendication 9, comprenant, en outre, une étape de meulage du joint d'étanchéité avant l'étape de déformation de l'élément de joint d'étanchéité (12).

11. Procédé selon la revendication 9 ou la revendication 10, dans lequel l'élément de joint d'étanchéité (12) est muni d'une fente en forme d'arc (14), l'étape de déformation de l'élément de joint d'étanchéité (12) comprenant l'étape de fracturation de l'élément de joint d'étanchéité (12) radialement vers l'extérieur de la fente (14).

12. Procédé selon la revendication 11, dans lequel l'étape de déformation de l'élément de joint d'étanchéité (12) comprend l'application d'un fluide sous pression dans la fente (14).
